# EUROPEAN PATENT APPLICATION

(11) **EP 2 164 202 A1**
(43) Date of publication of application: **17.03.2010**
(21) Application number: 08164143.3
(22) Date of filing: 11.09.2008
(51) Int. Cl.: H04L 1/16, H04L 1/18

(54) **Method for automatic repeat request operation, transceiver arrangement, and computer program**

(71) Applicant: TELEFONAKTIEBOLAGET LM ERICSSON (publ), 164 83 Stockholm (SE)
(72) Inventor: Rydén, Tobias, SE-224 56, LUND (SE); Astely, David, SE-168 56, BROMMA (SE); Nilsson, Johan, SE-236 38, HÖLLVIKEN (SE)
(74) Representative: Andersson, Björn E.

(57) **Abstract**

A method for automatic repeat request operation of a plurality of simultaneous automatic repeat request processes is disclosed. The method comprises receiving a transmission comprising at least one transport block; storing soft bits of the transport block in a buffer; and transmitting an automatic repeat request process signal, wherein the transmitting of the automatic repeat request process signal comprises one of: transmitting an acknowledgment signal if the transport block is determined to be properly received, transmitting a negative acknowledgement signal if the transport block is determined to contain an error, and transmitting a blocking indication signal if there is not room enough for the soft bits in the buffer. A transceiver arrangement and a computer program are also disclosed.

## Description

### Technical field

The invention relates to a method for automatic repeat request operation, a transceiver arrangement, and a computer program.

### Background

In many communication systems, an error control method called automatic repeat request (ARQ) is employed for data transmission. ARQ uses acknowledgment (ACK) signals and negative acknowledgement (NAK) signals, which are provided back to the transmitting entity, to achieve reliable data transmission. An ACK is a message sent by the receiver to the transmitter to indicate that it has correctly received a transport block, such as a data frame or packet. A NAK is a message that the received transport block contained one or more errors. If the sender receives a NAK, or possibly does not receive an ACK before a timeout, it usually re-transmits the transmission until it receives an ACK or exceeds a predefined number of re-transmissions.

Types of ARQ protocol include Stop-and-wait ARQ, Go-Back-N ARQ and Selective Repeat ARQ. These protocols reside in the Data Link Layer or Transport Layer of the OSI model. A variation of ARQ is Hybrid ARQ (HARQ), which has better performance, particularly over wireless channels, at the cost of increased implementation complexity.

When a transmitting entity prepares a new transport block for transmission to a receiving entity, it normally first codes it. Coding means that to the original bits of the transport block, here called systematic bits, additional parity bits are appended. The parity bits are not strictly necessary for the receiving entity to decode the data, but helps in doing so. The number of parity bits appended depends on the chosen code rate, but is normally not more than twice the number of bits of the original transport block. When the transmitting entity transmits the transport block for the first time, it can for example send the systematic bits plus possibly some parity bits. If the receiving entity cannot decode the transmission correctly it will respond with a NAK, and the transmitting entity can then resend the data, but may this time send more parity bits. Such a retransmission of the transport block is called incremental redundancy. In possible further retransmissions, the transmitting entity keeps transmitting further parity bits, and after possibly running out of parity bits, it starts all over again by resending the systematic bits. Such a retransmission is called Chase combining. The different retransmissions of a transport block are referred to as different redundancy versions (RVs), with RV 0 meaning the first transmission. The transmitting entity may indicate to the receiving entity which RV that is sent.

In the receiving entity, upon receipt of data from the transmitting entity, the received bits are normally not perfectly 0 or 1, as they are disturbed by noise. The receiving entity converts the received signal into soft bits. A soft bit is a more detailed piece of information that indicates how close a received bit is to 0 or 1. If a retransmission of a transport block is required, the soft bits so far are stored in a soft bit buffer of the receiving entity. When the retransmission arrives, the new determined soft bits are normally appended in the buffer to the old ones, or combined with the old ones to create a more reliable estimate of the transmitted bits. An important aspect of the soft bit buffer is thus its size, and in particular the memory area, in units of soft bits, available to each ARQ process. Indeed, since different ARQ processes may handle different transport blocks simultaneously, they need separate memory areas in the soft bit buffer. If the maximum number of ARQ processes that may exist does not fit simultaneously in the soft bit buffer, this effectively leads to statistical multiplexing of the soft bit buffer, as each ARQ process cannot statically be assigned a specific separate memory area. Instead, memory space must be assigned to those ARQ processes that currently receive data, decode data, or wait for retransmissions. With this solution, (re)transmissions will work as usual as long as the number of ARQ processes waiting for retransmissions is not too large. However, it could happen that when an ARQ process is about to receive a new transport block, there is no space available in the soft bit buffer because it is fully used by other ARQ processes that wait for retransmissions, or are currently decoding data. As an effect, the currently receiving ARQ process cannot receive or store any data. Such an event is referred to as ARQ blocking. With some receiver architectures a new transport block does not require any soft bit buffer space unless it cannot be decoded and hence has to wait for retransmission(s). The event that so happens, and that the soft bits of the transport block cannot be fit into the soft bit buffer, is here referred to as ARQ blocking as well. Also such an event is referred to as ARQ blocking. Indeed, the following general definition can be made: By ARQ blocking is meant the event that, when an ARQ process needs to store soft bits in the soft bit buffer of the receiving entity, there is not enough free space in the buffer to store all these bits.

As discussed above, when a receiving entity receives a transport block, it should respond with an ACK or a NAK depending on whether decoding was successful or not. For signalling that ARQ blocking occurred, the receiving entity can respond with a NAK, which is correct in the sense that it could not decode the transport block. Responding with a NAK causes other problems however. Indeed, since the transmitting entity will then believe that the receiving entity at least partly received the transport block, it will retransmit the transmission, possibly with a subsequent redundancy version of the transport block. Such a redundancy version is not helpful to the receiving entity for decoding when it has not been able to store the first transmission. In fact, without the systematic bits of the first version of the transport block, any parity bits are useless. In that case, the receiving entity will thus not be able to decode the transport block until the transmitting entity switches from incremental redundancy to Chase combining and resends the systematic bits. In the mean time the receiving entity will generate more NAKs, and useless retransmissions will deteriorate the transmission performance. It is therefore a desire to improve ARQ operation.

### Summary

It is therefore a desire to improve ARQ operation, in particular for alleviating problems occurring at ARQ blocking. The invention is based on the understanding that communication systems normally do not have assigned signalling or control channels for ARQ blocking, but that other inherent signals or signal types may be used for that purpose.

According to a first aspect, there is provided a method for automatic repeat request operation of a plurality of simultaneous automatic repeat request processes, the method comprising receiving a transmission comprising at least one transport block; storing soft bits of the transport block in a buffer; and transmitting an automatic repeat request process signal, wherein the transmitting of the automatic repeat request process signal comprises one of: transmitting an acknowledgment signal if the at least one transport block is determined to be properly received, transmitting a negative acknowledgement signal if the at least one transport block is determined to contain an error, and transmitting a blocking indication signal if there is not room enough for the soft bits in the buffer.

The transmitting of the blocking indication signal may comprise transmitting any signal but an acknowledgement signal or negative acknowledgement signal, or transmitting no signal.

The receiving of the transmission may comprise receiving a plurality of transport blocks which are to be confirmed in a single automatic repeat request process signal block, wherein the transmitting of the acknowledgment signal is performed if the all the transport blocks are determined to be properly received, the transmitting of the negative acknowledgement signal is performed if all the transport blocks could fit in the soft bit buffer, but any of the transport blocks is determined to contain an error, and the transmitting of the blocking indication signal is performed if, for any of the transport blocks, there is not room enough for the soft bits in the buffer.

The receiving of the transmission may comprise receiving a plurality of transport blocks which are to be confirmed in a single automatic repeat request process signal block, wherein the transmitting of the acknowledgment signal is performed for each of the transport blocks which are determined to be properly received, the transmitting of the negative acknowledgement signal is performed for each of the transport blocks which are determined to contain an error, and the transmitting of the blocking indication signal is performed for each of the transport blocks for which there is not room enough for their soft bits in the buffer.

According to a second aspect, there is provided a transceiver arrangement suitable for automatic repeat request operation of a plurality of simultaneous automatic repeat request processes, comprising a receiver circuitry arranged to receive a transmission comprising at least one transport block; a buffer arranged to store soft bits of the transport block; an automatic repeat request operation controller arranged to determine an automatic repeat request process signal comprising one of: an acknowledgment signal if the at least one transport block is determined to be properly received, a negative acknowledgement signal if the at least one transport block is determined to be contain an error, and a blocking indication signal if there is not room enough for the soft bits in the buffer; and a transmitter circuitry arranged to transmit the automatic repeat request process signal.

The blocking indication signal may comprise any signal but an acknowledgement signal or negative acknowledgement signal, or no signal.

The transmission may comprise a plurality of transport blocks which are to be confirmed in a single automatic repeat request process signal block, wherein the acknowledgment signal is determined if the all the transport blocks are determined to be properly received, the negative acknowledgement signal is determined if all the transport blocks could fit in the soft bit buffer, but any of the transport blocks is determined to contain an error, and the blocking indication signal is determined if, for any of the transport blocks, there is not room enough for the soft bits in the buffer, respectively, by the automatic repeat request operation controller.

The transmission may comprise a plurality of transport blocks which are to be confirmed in a single automatic repeat request process signal block, wherein the acknowledgment signal is determined for each of the transport blocks which are determined to be properly received, the negative acknowledgement signal is determined for each of the transport blocks which are determined to contain an error, and the blocking indication signal is determined for each of the transport blocks which there is not room enough for their soft bits in the buffer, respectively, by the automatic repeat request operation controller.

According to a third aspect, there is provided a computer program comprising computer executable instructions causing a processor, when executed thereon, to perform the steps according to the first aspect.

According to a fourth aspect, there is provided a network node for a radio network, the radio network comprising at least one terminal equipment being arranged to communicate with the network node, the network node being suitable for automatic repeat request operation of a plurality of simultaneous automatic repeat request processes for each such terminal equipment, and the network node comprising a transceiver arrangement according to the second aspect, and wherein the terminal equipment is the transmitting entity providing the transmission of the at least one transport block.

According to a fifth aspect, there is provided a terminal equipment for a radio network, the radio network comprising at least one network node being arranged to communicate with the terminal equipment, the terminal equipment being suitable for automatic repeat request operation of a plurality of simultaneous automatic repeat request processes, and the terminal equipment comprising a transceiver arrangement according to the second aspect, and wherein the network node is the transmitting entity providing the transmission of the at least one transport block.

In the context of the invention, the term "buffer" should be construed openly, e.g. to comprise a one or more sets of memory space. In the case of a single set of memory space, the buffer holds the soft bits that are stored and they are decoded from the single memory space. In case of multiple sets of memory space, e.g. two sets, the soft bits can be stored in a first set, be decoded and the decoded bits are stored in a second set, or the soft bits can be stored in the first set, and then be copied to the second set from which they are decoded. The presented approach is suitable for any buffer architecture.

### Brief description of drawings

Fig. 1 is a flow chart schematically illustrating a method for ARQ operation according to an embodiment.
Fig. 2 is a block diagram schematically illustrating a transceiver arrangement according to an embodiment.
Fig. 3 schematically illustrates a computer readable medium according to an embodiment.

### Detailed description

The principle of using a soft bit buffer with less space than required by all ARQ processes set up, will be given by examples referring to downlink transmission in Long Term Evolution Time Division Duplexing (LTE TDD) defined by Third Generation Partnership Project (3GPP). However, this is, in addition to illustrating the particular benefits and implementations for the given examples, for giving better understanding of the invention, which is not limited to the systems given in the examples. For instance, the approach of the invention is equally feasible for a User Equipment (UE) running LTE Frequency Division Duplexing (FDD) with a soft bit buffer fitting 7 or 6 DL HARQ processes simultaneously, or an eNodeB with a soft bit buffer that is shared between many UEs but cannot accommodate all uplink hybrid ARQ (UL HARQ) processes from all active UEs simultaneously.

In these cases, the UE or eNodeB, respectively, can respond with e.g. a signal indicating that the transmission was not received, or even lack of signal (sometimes referred to discontinuous transmission (DTX)), an indication that a transmission was not received at all, when the soft bit buffer does not fit a received transport block.

Also, it is equally feasible for HARQ operation in downlink and/or uplink that is used in other transmission technologies as well, for example wideband code division multiple access (WCDMA) systems. Thus, the invention can be applied to DL and/or UL HARQ operation in any transmission technology.

The general principle of the invention is thus: when a received set of data cannot be stored in the soft bit buffer, then indicate to the transmitting part that the transmission in question was not received at all. This indication could be sent as a specific signal, if there is such one supported by the system used, or by not sending a particular signal/signals. These principles will be understood from the description given below, taken in conjunction with the appended drawings.

A key requirement on LTE is frequency flexibility, and for this purpose carrier bandwidths between 1.4 MHz and 20 MHz are supported, for both FDD and TDD so that both paired and unpaired spectrum can be used. For FDD, the DL, i.e. the link from network nodes to terminal equipments, and UL, i.e. the link from the terminal equipments to the network nodes, use different frequencies and can hence transmit simultaneously. For TDD, uplink and downlink use the same frequency band and cannot transmit simultaneously. Uplink and downlink can however here share the time in a flexible way, and by allocating different amounts of time, such as the number of subframes of a radio frame, to uplink and downlink, it is possible to adapt to asymmetric traffic and resource needs in uplink and downlink. This asymmetry leads to a difference between FDD and TDD: Whereas for FDD, the same number of uplink and downlink subframes is available during a radio frame, for TDD, the number of uplink and downlink subframes may be different. One of many consequences of this is that in FDD a mobile terminal can always send feedback in response to a DL assignment of resources in an UL subframe subject to a certain fixed processing delay. In other words, every DL subframe can be associated to a specific later UL sub-frame for feedback generation in way that this association is one-to-one, i.e. to each UL subframe is associated exactly one DL subframe. For TDD however, since the number of UL and DL subframes during a radio frame may be different, it is in general not possible to construct such a one-to-one association. For the typical case with more DL subframes than UL subframes, it is rather so that feedback from several DL subframes needs to be transmitted in a single UL subframe. The approach of the invention is therefore adapted to this scenario in some embodiments.

In LTE, a radio frame of 10 ms duration is divided into ten subframes, each 1 ms long. In case of TDD, a subframe is either assigned to uplink or downlink, i.e. uplink and downlink transmission cannot occur at the same time. Furthermore, each 10 ms radio frame is divided into two half-frames of 5 ms duration where each half-frame consists of five subframes. The first subframe of a radio frame is always allocated to DL transmission. The second subframe is split into thee special fields: DwPTS, GP and UpPTS, with a total duration of 1 ms. UpPTS is used for uplink transmission of sounding reference signals and, if so configured, reception of a shorter random access preamble. No data or control signaling can be transmitted in UpPTS. GP is used to create a guard period between periods of DL and UL subframes and may be configured to have different lengths in order to avoid interference between UL and DL and is typically chosen based on the supported cell radius. DwPTS is used for downlink transmission much like any other DL subframe with the difference that it has shorter duration. Different allocations of the remaining subframes to UL and DL are supported, both allocations with 5 ms periodicity in which the first and second half-frame have identical structure, and allocations with 10 ms periodicity for which the two half-frames are organized differently. For certain configurations the entire second half-frame is assigned to DL transmission.

In the DL of LTE, OFDM with a subcarrier spacing of 15 kHz is used. In the frequency dimension the subcarriers are grouped into resource blocks, each containing twelve consecutive subcarriers. The number of resource blocks depends on the system bandwidth, and the minimum bandwidth corresponds to six resource blocks. Depending on the configured cyclic prefix length, a 1 ms subframe contains either 12 or 14 OFDM symbols in time. The term resource block is also used to refer to the two-dimensional structure of ½ subframe times 12 subcarriers. The special DL subframe DwPTS has a variable duration, and can assume lengths of 3, 9, 10, 11 or 12 OFDM symbols for the case with normal cyclic prefix, and 3, 8, 9 or 10 symbols for the case with extended cyclic prefix.

In the UL of LTE, single carrier frequency division multiple access (SC-FDMA), also referred to as discrete Fourier Transform (DFT) pre-coded orthogonal frequency division multiplex (OFDM), is used. The underlying two-dimensional, i.e. time and frequency, numerology is the same in terms of subcarrier spacing, cyclic prefix lengths and number of OFDM symbols. The major difference is that modulated data symbols to be transmitted in OFDM symbols are subject to a DFT and the outputs of the DFT are mapped to the subcarriers.

In order to improve performance of transmission in both the DL and UL directions, LTE uses hybrid-ARQ (HARQ). The function of this mechanism for DL transmission will be discussed here. The basic idea of hybrid-ARQ is that after receiving data in a DL subframe, the terminal attempts to decode it and then reports to the network node whether the decoding was successful or not by an acknowledgement (ACK) or negative acknowledgement (NAK), respectively. In case of an unsuccessful decoding attempt the network node thus receives a NAK in a later UL sub-frame, and can retransmit the erroneously received data. The data transmitted from the network node to a terminal equipment during a DL subframe is called a transport block.

For LTE FDD the terminal will in response to a DL transmission in subframe n, send and ACK/NAK report in uplink subframe n+4. For the case with so-called multiple input and multiple output (MIMO) multi-layer transmission two transport blocks are transmitted in a single DL subframe, and the terminal will respond with two ACK/NAK reports in the corresponding uplink subframe. If a NAK is sent in subframe n+4, the network node eNodeB can retransmit that transport block another 4 subframes later, i.e. in subframe n+8. Obviously, many transport blocks may be in the process of re-transmission simultaneously, with either the UE waiting to send a NAK, or the eNodeB waiting to retransmit. To handle this, the DL transmission uses a number of HARQ processes. Each HARQ process handles the (re)transmissions one transport block until it has been correctly received by the UE (or timed out after a maximum number of retransmissions). Thus a HARQ process exists in both the UE, where it receives and decodes (re)transmissions of the transport block and submits ACK/NAKs accordingly, and in the eNodeB, where it (re)transmits the transport block and receives the ACK/NAK reports. After a HARQ process has correctly transferred a transport block from the eNodeB to the UE, or after time-out, it can start working on a new transport block.

The number of HARQ processes required is determined by the time it takes from when a process transmits a transport block for the first time, until it can retransmit it or transmit another transport block. In FDD, this time is 4+4 = 8 subframes, so in total 8 HARQ processes are required for continuous DL transmission, i.e. transmission by some HARQ process in every sub-frame. In TDD the timing relations of 4 subframes from DL transmission to ACK/NAK report and vice versa do in general not apply, because the subframe 4 subframes after a DL transmission need not be an UL subframe, and similarly the subframe 4 subframes after an ACK/NAK report need not be a DL subframe. For this reason, the number of HARQ processes required for continuous DL transmission will vary with the UL/DL allocation in TDD.

In the 3GPP standardization process, it has been agreed to align the following parameters for TDD operation to the corresponding parameters agreed for FDD: maximum number of DL-SCH transport block bits received within a transmission time interval, maximum number of bits of a DL synchronization channel (DL-SCH) transport block received within a transmission time interval, maximum number of supported layers for spatial multiplexing in DL. It has further been agreed that the UE signal to the eNodeB that each DL HARQ process has available is a soft bit buffer area corresponding to a fraction 1/(Kmult*min(NHARQ,Nmax)) of the total soft bit buffer size. Here Kmult is the number of spatial multiplexing layers used for DL transmission (1 or 2). If this number is larger than 1, the number of DL HARQ processes will increase by the same factor. NHARQ is the number of DL HARQ processes and Nmax is a constant that has been proposed equal to 9.

The effect of this proposal is thus that each DL HARQ process believes it has memory available as if no more than 9 HARQ processes exist. If the actual number of HARQ processes is larger, this effectively leads to statistical multiplexing of the soft bit buffer, as each HARQ process cannot statically be assigned a specific separate memory area. Instead, memory space must be assigned to those HARQ processes that currently receive data, decode data, or wait for retransmissions. With this solution, DL (re)transmissions will work as usual as long as the number of HARQ processes waiting for retransmissions is not too large. However, it could happen that when a HARQ process is about to receive a new transport block, there is no space available in the soft bit buffer because it is fully used by other HARQ processes that wait for retransmissions, or are currently decoding data. As an effect, the currently receiving HARQ process cannot receive or store any data. Such an event is referred to as a HARQ blocking. With some receiver architectures, a new transport block does not require any soft bit buffer space unless it cannot be decoded and hence has to wait for retransmissions. The event that so happens, and that the soft bits of the transport block cannot be fit into the soft bit buffer, is here referred to as HARQ blocking as well.

HARQ blocking is an undesired event, and the eNodeB preferably adjusts its transmission parameters such that the block error rate (BLER) is small enough that the probability of HARQ blocking becomes a sufficiently rare event. According to an embodiment, this adjustment is performed upon reception of a blocking indication signal, as will be further elucidated below.

As discussed above, when a UE receives a transport block, it should respond with an ACK or a NAK depending on whether decoding was successful or not. There is however in LTE no way to explicitly signal that HARQ blocking occurred.

In light of these circumstances noted by the inventors, methods and apparatuses of terminal equipment and network node will now be presented.

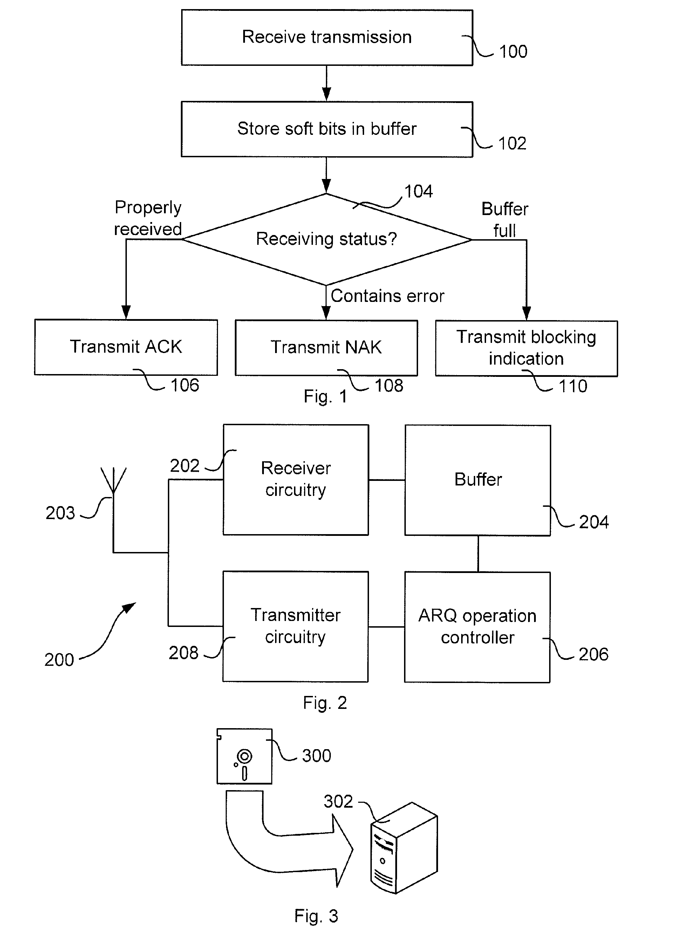

Fig. 1 is a flow chart schematically illustrating a method for ARQ operation according to an embodiment. The method is suitable for the entity receiving data and providing feedback by an ARQ process signal, i.e. ACK, NAK, or blocking indicator, where a plurality of simultaneous ARQ processes are present. The ARQ processes can for example be HARQ processes.

In a transmission reception step 100, a transmission comprising at least one transport block is received. From a received signal, soft information, i.e. a more detailed piece of information that indicates how close a received signal is to a symbol, is determined and soft bits, i.e. a digital representation of the soft information, of the transport block is stored in a buffer in a soft bit storing step 102. It is determined whether the received transport block is properly received, or if it contains any error. It is also determined if the storage operation of he soft bits in the soft storing step 102 was successful, or if there was not room enough for the soft bits, i.e. if there was an ARQ blocking situation. From these determinations, receiving status is determined in a receiving status determination step 104, based on which either of a transmit ACK step 106, a transmit NAK step 108, or a transmit blocking indicator step 110 is to be performed. In the transmit ACK step 106, an acknowledgement signal is transmitted back to the sender of the transmission to confirm that the transmission was properly received. In the transmit NAK step 108, a negative acknowledgement signal is transmitted back to the sender of the transmission to indicate that the transmission contained one or more errors. The errors can for example occur due to noise or interference of the received signal. In the transmit blocking indicator step 110, a blocking indicator signal is sent back to the sender of the transmission to indicate that there was not room enough for the soft bits in the buffer, and the transport block could therefore not be properly processed. The blocking indication signal can be any signal, except of course an ACK or NAK, for example a discontinuous transmission signal. The blocking indication "signal" can also be a lack of signal, i.e. no signal is transmitted (sometimes referred to discontinuous transmission (DTX)), which thereby is interpreted as a blocking indicator. For the case where the received signal comprises a plurality of transport blocks, and these are to be confirmed in a single ARQ process signal block, the transmit ACK step 106 is performed if all the transport blocks are determined to be properly received, the transmit NAK step 108 is performed if all the transport blocks could fit in the soft bit buffer, but any of the transport blocks is determined to contain an error, and the transmit blocking indicator step 110 is performed if, for any of the transport blocks, there is not room enough for the soft bits in the buffer. For the case where the single ARQ process signal block can hold separate feedback information for each of the transport blocks, the appropriate step 106, 108, 110 for respective transport block is performed to form an aggregate transmission of the ARQ process signals in the single ARQ process signal block.

Fig. 2 is a block diagram schematically illustrating a transceiver arrangement 200 according to an embodiment. The transceiver arrangement is suitable for the entity receiving data and providing feedback by an ARQ process signal, i.e. ACK, NAK, or blocking indicator, where a plurality of simultaneous ARQ processes are present. The ARQ processes can for example be HARQ processes. An example for such entity is a terminal equipment receiving a downlink transmission from a network node, or opposite, a network node receiving an uplink transmission from a terminal equipment.

The transceiver arrangement 200 comprises a receiver circuitry 202 arranged to receive a transmission, e.g. via an antenna 203, the transmission comprising at least one transport block. The transceiver arrangement 200 further comprises a buffer 204 arranged to store soft bits of the transport block. The soft bits, and their determination has been elucidated above, and they are preferably provided by the receiver circuitry 202, and possibly with aid of a processor (not shown). The transceiver arrangement 200 also comprises an ARQ operation controller 206 arranged to determine an ARQ process signal, as also elucidated above with reference to e.g. Fig. 1. The ARQ operation controller 206 is also preferably operating with aid, or integrated in, a processor (not shown), which may be the same as handling the soft bits, or a separate one. The ARQ operation controller 206 provides for the ARQ process signal being transmitted by a transmitter circuitry 208 of the transceiver arrangement 200, e.g. via the antenna 203. As elucidated above with reference to Fig. 1, the ARQ process signal may be associated to a plurality of transport blocks, and may need to be transmitted in a single ARQ process signal block. The ARQ operation controller 206 handles this operation either by, for the case where only one type of ARQ process signal type can be included in the ARQ process signal block, arranging transmission of an ACK if all the transport blocks are determined to be properly received, transmission of a NAK if all the transport blocks could fit in the soft bit buffer, but any of the transport blocks is determined to contain an error, and transmission of a blocking indicator if, for any of the transport blocks, there is not room enough for the soft bits in the buffer 204, or for the case where the single ARQ process signal block can hold separate feedback information for each of the transport blocks, the appropriate ARQ process signal types for respective transport block is formed as an aggregate transmission of the ARQ process signals in the single ARQ process signal block.

Fig. 3 schematically illustrates a computer readable medium 300 according to an embodiment. The embodiments of the methods described above are suitable for implementation with aid of processing means, such as computers and/or processors, as the operation of ARQ processes highly rely on computerized signal processing. Therefore, there is provided computer programs, comprising instructions arranged to cause the processing means, processor, or computer to perform the steps of any of the methods according to any of the embodiments described with reference to Figs. 1, in a transceiver arrangement. The computer programs preferably comprises program code which is stored on the computer readable medium 300, as illustrated in Fig. 3, which can be loaded and executed by a processing means, processor, or computer 302 to cause it to perform the methods, respectively, according to the embodiments, preferably as any of the embodiments described with reference to Fig. 1. The computer 302 and computer program product 300 can be arranged to execute the program code sequentially where actions of the any of the methods are performed stepwise, but mostly be arranged to execute the program code on a real-time basis where actions of any of the methods are performed upon need and availability of data. The processing means, processor, or computer 302 is preferably what normally is referred to as an embedded system. Thus, the depicted computer readable medium 300 and computer 302 in Fig. 3 should be construed to be for illustrative purposes only to provide understanding of the principle, and not to be construed as any direct illustration of the elements.

## Claims

1. A method for automatic repeat request operation of a plurality of simultaneous automatic repeat request processes, the method comprising
receiving a transmission comprising at least one transport block;
storing soft bits of the transport block in a buffer; and
transmitting an automatic repeat request process signal, wherein the transmitting of the automatic repeat request process signal comprises one of:
transmitting an acknowledgment signal if the at least one transport block is determined to be properly received,
transmitting a negative acknowledgement signal if the at least one transport block is determined to contain an error, and
transmitting a blocking indication signal if there is not room enough for the soft bits in the buffer.

2. The method according to claim 1, wherein the transmitting of the blocking indication signal comprises transmitting any signal but an acknowledgement signal or negative acknowledgement signal, or transmitting no signal.

3. The method according to any of claims 1 or 2, wherein the receiving of the transmission comprises receiving a plurality of transport blocks which are to be confirmed in a single automatic repeat request process signal block, wherein the transmitting of the acknowledgment signal is performed if the all the transport blocks are determined to be properly received, the transmitting of the negative acknowledgement signal is performed if all the transport blocks could fit in the soft bit buffer, but any of the transport blocks is determined to contain an error, and the transmitting of the blocking indication signal is performed if, for any of the transport blocks, there is not room enough for the soft bits in the buffer.

4. The method according to any of claims 1 or 2, wherein the receiving of the transmission comprises receiving a plurality of transport blocks which are to be confirmed in a single automatic repeat request process signal block, wherein the transmitting of the acknowledgment signal is performed for each of the transport blocks which are determined to be properly received, the transmitting of the negative acknowledgement signal is performed for each of the transport blocks which are determined to contain an error, and the transmitting of the blocking indication signal is performed for each of the transport blocks which there is not room enough for their soft bits in the buffer.

5. A transceiver arrangement suitable for automatic repeat request operation of a plurality of simultaneous automatic repeat request processes, comprising
a receiver circuitry arranged to receive a transmission comprising at least one transport block;
a buffer arranged to store soft bits of the transport block;
an automatic repeat request operation controller arranged to determine an automatic repeat request process signal comprising one of:
an acknowledgment signal if the at least one transport block is determined to be properly received,
a negative acknowledgement signal if the at least one transport block is determined to be contain an error, and
a blocking indication signal if there is not room enough for the soft bits in the buffer; and
a transmitter circuitry arranged to transmit the automatic repeat request process signal.

6. The transceiver arrangement according to claim 5, wherein the blocking indication signal comprises any signal but an acknowledgement signal or negative acknowledgement signal, or no signal.

7. The transceiver arrangement according to any of claims 5 or 6, wherein the transmission comprises a plurality of transport blocks which are to be confirmed in a single automatic repeat request process signal block, wherein the acknowledgment signal is determined if the all the transport blocks are determined to be properly received, the negative acknowledgement signal is determined if all the transport blocks could fit in the soft bit buffer, but any of the transport blocks is determined to contain an error, and the blocking indication signal is determined if, for any of the transport blocks, there is not room enough for the soft bits in the buffer, respectively, by the automatic repeat request operation controller.

8. The transceiver arrangement according to any of claims 5 or 6, wherein the transmission comprises a plurality of transport blocks which are to be confirmed in a single automatic repeat request process signal block, wherein the acknowledgment signal is determined for each of the transport blocks which are determined to be properly received, the negative acknowledgement signal is determined for each of the transport blocks which are determined to contain an error, and the blocking indication signal is determined for each of the transport blocks which there is not room enough for their soft bits in the buffer, respectively, by the automatic repeat request operation controller.

9. A computer program comprising computer executable instructions causing a processor, when executed thereon, to perform the steps according to any of claims 1 to 4.

10. A network node for a radio network, the radio network comprising at least one terminal equipment being arranged to communicate with the network node, the network node being suitable for automatic repeat request operation of a plurality of simultaneous automatic repeat request processes for each such terminal equipment, and the network node comprising a transceiver arrangement according to any of claims 5 to 8, and wherein the terminal equipment is the transmitting entity providing the transmission of the at least one transport block.

11. A terminal equipment for a radio network, the radio network comprising at least one network node being arranged to communicate with the terminal equipment, the terminal equipment being suitable for automatic repeat request operation of a plurality of simultaneous automatic repeat request processes, and the terminal equipment comprising a transceiver arrangement according to any of claims 5 to 8, and wherein the network node is the transmitting entity providing the transmission of the at least one transport block.
